# EUROPÄISCHE PATENTSCHRIFT

(11) **EP 2 633 286 B1**
(45) Veröffentlichungstag und Bekanntmachung des Hinweises auf die Patenterteilung: **12.02.2020**
(21) Anmeldenummer: 11785330.9
(22) Anmeldetag: 25.10.2011
(51) Int. Cl.: G01N 21/3581

(54) **EFFIZIENZ-VERBESSERTES FASERGEKOPPELTES TERAHERTZSYSTEM**
IMPROVED-EFFICIENCY FIBRE-COUPLED TERAHERTZ SYSTEM
SYSTÈME À TÉRAHERTZ À FIBRES COUPLÉES À EFFICACITÉ AMÉLIORÉE

(30) Priorität: 25.10.2010 DE 102010049658
(43) Veröffentlichungstag der Anmeldung: 04.09.2013
(73) Patentinhaber: Fraunhofer-Gesellschaft zur Förderung der angewandten Forschung e.V., 80686 München (DE)
(72) Erfinder: SARTORIUS, Bernd, 14052 Berlin (DE); ROEHLE, Helmut, 13629 Berlin (DE); STANZE, Dennis, 14059 Berlin (DE); DIETZ, Roman, 10437 Berlin (DE)
(74) Vertreter: Pfenning, Meinig & Partner mbB
(86) Internationale Anmeldenummer: PCT/EP2011/005530
(87) Internationale Veröffentlichungsnummer: WO 2012/055574

(56) Entgegenhaltungen:
- DE-B3-102006 010 297
- DE-B3-102006 010 301
- FR-A1- 2 870 386
- PACEBUTAS V ET AL: "Terahertz time-domain-spectroscopy system based on femtosecond Yb:fiber laser and GaBiAs photoconducting components", APPLIED PHYSICS LETTERS, AIP, AMERICAN INSTITUTE OF PHYSICS, MELVILLE, NY, US, Bd. 97, Nr. 3, 20. Juli 2010 (2010-07-20), Seiten 31111-31111, XP012138382, ISSN: 0003-6951, DOI: 10.1063/1.3458826
- FRANCOEUR S ET AL: "Band gap of GaAs1-xBix", APPLIED PHYSICS LETTERS, AIP, AMERICAN INSTITUTE OF PHYSICS, MELVILLE, NY, US, Bd. 82, Nr. 22, 2. Juni 2003 (2003-06-02), Seiten 3874-3876, XP012034254, ISSN: 0003-6951, DOI: 10.1063/1.1581983
- DYSON A ET AL: "Comparison of Type I and Type II Heterojunction Unitravelling Carrier Photodiodes for Terahertz Generation", IEEE JOURNAL OF SELECTED TOPICS IN QUANTUM ELECTRONICS, IEEE SERVICE CENTER, PISCATAWAY, NJ, US, Bd. 14, Nr. 2, 1. März 2008 (2008-03-01), Seiten 277-283, XP011206852, ISSN: 1077-260X
- STANZE D ET AL: "Coherent CW terahertz systems employing photodiode emitters", INFRARED, MILLIMETER, AND TERAHERTZ WAVES, 2009. IRMMW-THZ 2009. 34TH INTERNATIONAL CONFERENCE ON, IEEE, PISCATAWAY, NJ, USA, 21. September 2009 (2009-09-21), Seiten 1-3, XP031562560, ISBN: 978-1-4244-5416-7
- MANGENEY J ET AL: "Ion-irradiated In0.53Ga0.47As photoconductive antennas for THz generation and detection at 1.55 mum wavelength", COMPTES RENDUS - PHYSIQUE, ELSEVIER, PARIS, FR, vol. 9, no. 2, 1 March 2008 (2008-03-01), pages 142-152, XP022616298, ISSN: 1631-0705, DOI: 10.1016/J.CRHY.2007.07.008 [retrieved on 2007-10-31]
- PACEBUTAS V ET AL: "Characterization of low-temperature molecular-beam-epitaxy grown GaBiAs layers", SEMICONDUCTOR SCIENCE AND TECHNOLOGY, IOP PUBLISHING LTD, GB, vol. 22, no. 7, 1 July 2007 (2007-07-01), pages 819-823, XP020115050, ISSN: 0268-1242, DOI: 10.1088/0268-1242/22/7/026
- DARMO J ET AL: "Intra- and extra-cavity THz generation from optically and electrically confined photoconducting layer's", TERAHERTZ ELECTRONICS PROCEEDINGS, 2002. IEEE TENTH INTERNATIONAL CONF ERENCE ON 9 - 10 SEP 2002, PISCATAWAY, NJ, USA,IEEE, 9 September 2002 (2002-09-09), pages 67-69, XP010605634, ISBN: 978-0-7803-7630-4
- MADOURI D ET AL: "Bismuth alloying in GaAs: a first-principles study", COMPUTATIONAL MATERIALS SCIENCE, ELSEVIER, AMSTERDAM, NL, vol. 43, no. 4, 1 October 2008 (2008-10-01), pages 818-822, XP025472518, ISSN: 0927-0256, DOI: 10.1016/J.COMMATSCI.2008.01.059 [retrieved on 2008-03-10]

## Beschreibung

Die Erfindung betrifft ein Terahertzsystem zum Erzeugen und kohärenten Detektieren von Terahertzstrahlung nach dem Oberbegriff des Hauptanspruchs.

Als Terahertzstrahlung sei dabei elektromagnetische Strahlung einer Frequenz von zwischen 0,05 THz und 20 THz bezeichnet, wobei die Frequenz typischerweise zwischen 0,1 THz und 10 THz liegen wird. Für eine elektronische Signalverarbeitung sind diese Frequenzen sehr hoch, verglichen mit den für Photonik typischen Frequenzen dagegen sehr klein, so dass eine Quantenenergie von Terahertzstrahlung noch sehr gering ist. Mit Terahertzstrahlung arbeitende Messsysteme sind daher schwer zu realisieren, weshalb Terahertzstrahlung den letzten Bereich des elektromagnetischen Spektrums bildet, der für praktische Anwendungen noch nicht in befriedigendem Maß erschlossen ist.

Terahertzsysteme der hier beschriebenen Art nutzen opto-elektronische Halbleiterchips zum Erzeugen und Detektieren von Terahertzstrahlung. Ein gattungsgemäßes Terahertzsystem umfasst dabei eine Laserlichtquelle und zwei jeweils über einer Lichtleitfaser optisch mit der Laserlichtquelle gekoppelte und durch Licht dieser Laserlichtquelle aktivierbare THz-Antennen, von denen eine erste als Sendeantenne und eine zweite als Empfängerantenne dient. Dabei weisen die THz-Antennen jeweils einen mit Antennenleitern kontaktierten Halbleiterchip auf, der mindestens eine photoempfindliche aktive Schicht mit einer Bandkantenwellenlänge, die größer ist als eine Wellenlänge der Laserlichtquelle, umfasst sowie mindestens eine an die aktive Schicht angrenzende Schicht mit einer Bandkantenwellenlänge, die kleiner ist als die Wellenlänge der Laserlichtquelle. Die Antennenleiter sind dabei typischerweise auf dem jeweiligen Halbleiterchip integriert. Die Laserlichtquelle kann dabei zum Erzeugen kurzer Pulse oder zum Erzeugen von Schwebungssignalen im THz-Bereich durch Überlagern zweier Laserwellen geringfügig unterschiedlicher Wellenlängen ausgebildet sein. Die Wellenlänge einer Laserlichtquelle sei in der vorliegenden Schrift jeweils definiert als Schwerpunkt eines Wellenlängenspektrums des von der Laserlichtquelle erzeugten Lichts. Mit solchen Terahertzsystemen kann nun Terahertzstrahlung erzeugt und kohärent detektiert werden, indem an die Antennenleiter der Sendeantenne eine Spannung angelegt wird, während die Sendeantenne und die Empfängerantenne gleichzeitig mit kohärenter Strahlung der Laserlichtquelle aktiviert werden und ein in der Empfängerantenne erzeugter Strom gemessen wird mittels eines mit den Antennenleitern der Empfängerantenne verbundenen Sensors. Um eine zwischen der Sendeantenne und der Empfängerantenne angeordnete Probe zu untersuchen, kann auf diese Weise ein Empfangssignal für verschiedene Verzögerungen einer Lichtlaufzeit zwischen der Laserlichtquelle und der Empfängerantenne oder der Sendeantenne detektiert werden.

Terahertzsysteme dieser Art sind z.B. aus der Druckschrift DE 10 2007 044 839 A1 bekannt. Durch die Verwendung von Lichtleitfasern zur Verbindung der Laserlichtquelle mit den THz-Antennen lassen sich diese Terahertzsysteme vorteilhaft kompakt, robust und flexibel realisieren. Die aus dem Stand der Technik bekannten Terahertzsysteme dieser Art haben jedoch noch nicht befriedigende Leistungen, wobei sowohl verhältnismäßig geringe Sendeleistungen der Sendeantennen als auch begrenzte Empfindlichkeiten der Empfängerantennen lange Integrationszeiten beim Messen notwendig machen, was zu nachteilig langsamen Messungen führt. Auch können stark absorbierende Materialien schon bei verhältnismäßig geringen Materialstärken nicht mehr durchstrahlt und kleine Signale nicht zuverlässig erfasst werden.

Ein Terahertzsystem nach dem Oberbegriff des Hauptanspruchs beschreiben D. Stanze et al. in dem Artikel "Coherent CW Terahertz Systems Employing Photodiode Emitters" im Konferenzbericht zur IRMMW-THz 2009 (34th), ISBN 978-1-4244-5416-7.

Der vorliegenden Erfindung liegt die Aufgabe zugrunde, ein vergleichbares, aber Effizienzverbessertes Terahertzsystem vorzuschlagen, mit dem sich bei gegebener Leistung der Laserlichtquelle eine höhere Sendeleistung und eine bessere EmpfängerEmpfindlichkeit realisieren lassen, wobei das Terahertzsystem vergleichbar kompakt und robust sein soll.

Diese Aufgabe wird erfindungsgemäß gelöst durch ein Terahertzsystem mit den kennzeichnenden Merkmalen des Hauptanspruchs in Verbindung mit den Merkmalen des Oberbegriffs des Hauptanspruchs. Vorteilhafte Ausgestaltungen und Weiterentwicklungen der Erfindung ergeben sich mit den Merkmalen der Unteransprüche.

Die Erfindung sieht also vor, dass die Bandkantenwellenlänge der aktiven Schicht mindestens einer der THz-Antennen mindestens 250 nm größer ist als die Wellenlänge der Laserlichtquelle. Vorzugsweise trifft das sowohl für die Sendeantenne als auch für die Empfängerantenne zu, wobei jedoch beide unterschiedlich aufgebaut sein können und nicht identische Bandkantenwellenlängen haben müssen. Durch den verhältnismäßig großen Abstand zwischen der Bandkantenwellenlänge der aktiven Schicht und der Wellenlänge der Laserlichtquelle wird erreicht, dass die aktive Schicht einen sehr hohen Absorptionskoeffizienten für Licht der Laserlichtquelle hat. Das bringt den Vorteil mit sich, dass das zum Aktivieren der THz-Antenne dienende Licht der Laserlichtquelle, auch bei einer sehr dünnen Ausführung der aktiven Schicht, dort stark absorbiert wird.

Wenn pro absorbiertes Photon genau ein Elektron-Loch-Paar erzeugt wird und die eingestrahlte optische Leistung konstant gehalten wird, dann werden bei kurzwelligem Licht mit hoher Photonenenergie weniger frei bewegliche Ladungsträger erzeugt als bei Nutzung von langwelligerem, aber noch absorbiertem Licht mit kleiner Photonenenergie. Kurzwelliges Licht ist deshalb an sich ungünstig für einen auf die eingestrahlte Leistung bezogenen möglichst effektiven Photoeffekt. Darüber hinaus wird die Überschussenergie der hochenergetischen Photonen auch noch in Erwärmung umgesetzt, was typischerweise die Funktion von Halbeiterkomponenten beeinträchtigt. Der Photoeffekt ist nun aber nur ein Teilschritt bei der Erzeugung und Detektion von Terahertzstrahlung. Wenn die Hochfrequenz-Charakteristik bei der Umwandlung von Photoeffekt in Terahertzstrahlung sehr dünne absorbierende Schichten als besonders vorteilhaft erscheinen lässt, dann kann sich eine neue Gesamtbewertung ergeben. Es entsteht dann jedenfalls die Anforderung an eine hohe Lichtabsorption in den sehr dünnen Schichten. Das kann durch das hier geforderte kurzwellige Licht erreicht werden. Insgesamt kann so im Fall der Sendeantenne eine große THz-Sendeleistung und im Fall der Empfängerantenne eine hohe THz-Empfindlichkeit erreicht werden, weil die Hochfrequenz-Charakteristik durch sehr dünne aktive Schichten optimierbar ist und eine gute Lichtabsorption dadurch erreicht wird, dass die Wellenlänge der Lichtquelle mindestens 250 nm größer ist als die Bandkantenwellenlänge. Es lässt sich so das Problem umgehen, dass die THz-Antennen entweder - wegen zu dicker aktiver Schichten - nicht schnell genug sind oder - wegen zu geringer Lichtabsorption - nicht leistungsstark bzw. empfindlich genug sind.

Der beschriebene Vorteil kommt also dadurch zum Tragen, dass die Bandkantenwellenlänge der aktiven Schicht mindestens einer der THz-Antennen mindestens 250 nm größer ist als die Wellenlänge der Laserlichtquelle. Das liegt daran, dass der Absorptionskoeffizient der aus einem photoempfindlichen Material gebildeten aktiven Schicht von der Bandkantenwellenlänge zu kleineren Wellenlängen hin zumindest zunächst sehr steil ansteigt.

Als Bandkantenwellenlänge sei hier jeweils eine Wellenlänge λ bezeichnet, die gemäß λ = hc/ΔE mit einer Bandlücke ΔE, also einem Abstand zwischen einem Valenzband und einem Leitungsband, zusammenhängt, wobei h das plancksche Wirkungsquantum und c die Lichtgeschwindigkeit bezeichnet. Die Bandlücke kann dabei auch von einer Schichtdicke der jeweiligen Schicht abhängen. Sofern die Bandlücke und damit auch die Bandkantenwellenlänge temperaturabhängig sind, seien hier stets ihre in üblicher Weise definierten Werte bei Betriebstemperatur gemeint, typischerweise bei zwischen 10°C und 40°C, vorzugsweise bei 20°C.

Durch einen nicht zu kleinen Abstand zwischen der Wellenlänge der Laserlichtquelle und der Bandkantenwellenlänge der mindestens einen an die aktive Schicht angrenzenden Schicht wird sichergestellt, dass das Licht der Laserlichtquelle nicht in der angrenzenden Schicht absorbiert wird, was die Effizienz der THz-Antenne drastisch verschlechtern und zu einer nachteiligen zusätzlichen Wärmeentwicklung führen würde.

Auch wenn die hier genannten besonderen Eigenschaften unter Umständen auch nur für die Sendeantenne oder nur für die Empfängerantenne zutreffen können, ist es selbstverständlich besonders vorteilhaft, wenn das für beide THz-Antennen der Fall ist. Bei zweckmäßigen Ausführungen ist ferner eine vorzugsweise steuerbare optische Verzögerungsschaltung zwischen die Laserlichtquelle und eine der THz-Antennen geschaltet, damit eine Zeitlage optischer Steuersignale zur Aktivierung der beiden THz-Antennen relativ zueinander verschoben werden kann. Dadurch lassen sich sowohl eine Dämpfung der Terahertzstrahlung als auch eine Verzögerung einer Laufzeit derselben durch eine zwischen der Sendeantenne und der Empfängerantenne angeordnete Probe präzise bestimmen.

Die genannten Bedingungen können dadurch gut eingehalten werden, dass die Bandkantenwellenlänge eines die aktive Schicht bildenden Halbleitermaterials mindestens einer der THz-Antennen mindestens 1600 nm beträgt. Die aktive Schicht selbst kann dabei aufgrund des Quantenbrunneneffekts auch eine geringere Bandkantenwellenlänge haben, die aber jedenfalls noch einen hinreichend großen Abstand zur Wellenlänge der Laserlichtquelle hat. Die aktive Schicht kann dazu z.B. aus InGaAs gebildet sein, das eine Bandkantenwellenlänge von etwa 1650 nm hat, oder vorzugsweise überwiegend InGaAs enthalten. So kann die aktive Schicht z.B. aus mit Beryllium dotiertem InGaAs, also aus InGaAs:Be, gebildet sein. Ein Substrat des Halbleiterchips der THz-Antenne kann dabei aus InP gebildet sein. Die aktive Schicht und die mindestens eine daran angrenzende Schicht kann z.B. epitaktisch auf dieses Substrat aufgewachsen werden.

Um eine für die Erzeugung oder Detektion von Terahertzstrahlung wichtige schnelle Ansprechbarkeit zu erreichen, hat die aktive Schicht mindestens einer der THz-Antennen erfindungsgemäß eine Dicke, die höchstens einer Eindringtiefe des Lichts der Laserlichtquelle entspricht. Die Eindringtiefe sei dabei definiert als eine Tiefe, in der eine Strahlungsintensität des einfallenden Lichts der Laserlichtquelle auf einen Anteil von 1/e des Betrags der Strahlungsintensität an einer mit dem Licht bestrahlten Oberfläche abgefallen ist.

Typischerweise wird zumindest die Empfängerantenne des THz-Systems auf einem Photoleiter basieren. Das gleiche kann auch bei der Sendeantenne der Fall sein. Der Halbleiterchip einer photoleiterbasierten THz-Antenne kann eine oder auch mehrere aktive Schichten aufweisen. In der Regel wird dabei die aktive Schicht oder jede der aktiven Schichten jeweils zwischen zwei angrenzenden Schichten eingebettet sein. Die angrenzenden Schichten dienen dabei als Rekombinationsschichten. Besonders vorteilhaft ist es, wenn der Halbleiterchip eine periodische Schichtstruktur hat mit einer Vielzahl von abwechselnd angeordneten aktiven Schichten und Rekombinationsschichten, wobei z.B. 100 oder mehr aktive Schichten vorgesehen sein können. Dadurch wird es möglich, die aktiven Schichten einerseits sehr dünn auszuführen, um einen hinreichend schnellen Photoleiter zu realisieren, gleichzeitig jedoch einen für ein effizientes Terahertzsystem unerlässlichen hohen Photostrom bei einfallendem Licht der Laserlichtquelle zu erreichen. Dazu sollten die aktiven Schichten der auf einem Photoleiter basierenden THz-Antenne nicht dicker als 12 nm sein, vorzugsweise 10 nm oder dünner, wobei besonders gute Ergebnisse erzielt werden, wenn die aktiven Schichten jeweils nicht dicker als 8 nm, besser noch höchstens 6 nm dick sind. Die Rekombinationsschichten können z.B. mit einer Dicke von höchstens 10 nm ausgeführt werden, typischerweise mit einer Dicke von etwa 8 nm. Eine durch die aktiven Schichten und die Rekombinationsschichten gebildete Schichtstruktur kann dabei an einer Oberfläche oder an seitlichen Stirnflächen mit den Antennenleitern kontaktiert sein.

Als Material für die mindestens eine an die aktive Schicht angrenzende Schicht bietet sich bei einem Photoleiter InAlAs an, das eine hinreichend kurze Bandkantenwellenlänge aufweist. Die mindestens eine als Rekombinationsschicht dienende Schicht kann also vorzugsweise überwiegend InAlAs enthalten und z.B. aus mit Elektronenfallen oder Rekombinationszentren versehenem InAlAs gebildet sein.

Die Sendeantenne kann auch auf einer Photodiode anstelle eines Photoleiters basieren. Die vorzugsweise zumindest weitgehend aus InGaAs gebildete aktive Schicht ist dann in der Regel höchstens 400 nm dick, vorzugsweise nicht dicker als 300 nm. Bei im Hinblick auf eine schnelle Ansprechbarkeit der Photodiode besonders vorteilhaften Ausführungen ist die aktive Schicht der Photodiode dabei nicht dicker als 200 nm oder 100 nm. Die mindestens eine an die aktive Schicht angrenzende Schicht, die hier als Kontaktschicht bezeichnet werden kann, kann z.B. InGaAsP oder InGaAlAs enthalten und vorzugsweise überwiegend aus einem dieser Materialien gebildet sein. Typischerweise sind dabei wieder zwei angrenzende Schichten vorgesehen, zwischen denen die aktive Schicht angeordnet ist, wobei hier eine der angrenzenden Schichten p-dotiert und eine n-dotiert ist. Die Bandkantenwellenlänge dieser quaternären Schichten kann durch das Mischverhältnis eingestellt werden. Für eine gute Funktion der Photodioden muss die Bandkantenwellenlänge dieser Schichten kleiner sein als die der aktiven Schicht, aber die Diskontinuität in Leitungs- und Valenzband darf auch nicht zu groß werden. Für eine aktive Schicht aus InGaAs auf InP mit einer Bandkantenwellenlänge von 1650 nm stellen typischerweise Grenzschichten mit 1200 nm Bandkantenwellenlänge eine untere Grenze dar. Diese Schichten sind für Wellenlängen oberhalb 1250 nm gut transparent, was einen erwünschten großen Abstand des Laserlichtes zur Bandkantenwellenlänge der aktiven Schicht erlaubt ohne Absorption in den Grenzschichten. Durch die Verwendung einer Photodiode lässt sich eine besonders hohe Effizienz der Sendeantenne erreichen.

Es kann vorgesehen sein, dass mindestens eine der angrenzenden Schichten mindestens einer der THz-Antennen als Wellenleiter dient, in die das Licht der Laserlichtquelle durch die diese THz-Antenne mit der Laserlichtquelle verbindende Lichtleitfaser in einer durch die Schicht definierten Ebene propagierend eingekoppelt wird. So lässt sich ein vorteilhaft kompakter Aufbau realisieren und erreichen, dass die Photonenenergien des Lichts der Laserlichtquelle sehr effektiv in der aktiven Schicht absorbiert werden können. Eine Ausführung mindestens einer der angrenzenden Schichten als Wellenleiter, durch den das Licht der Laserlichtquelle eingespeist wird, bietet sich dabei insbesondere im Fall der Sendeantenne an, wenn diese photodiodenbasiert ist.

Die Wellenlänge der Laserlichtquelle des Terahertzsystems kann z.B. zwischen 1260 nm und 1360 nm liegen, im sog. O-Band der Faser-Telekommunikation, vorzugsweise zwischen 1260 nm und 1310 nm. Zusätzlich zu den gewünschten Abständen zu den Bandkantenwellenlängen der aktiven Schicht und der mindestens einen angrenzenden Schicht ergibt sich dadurch der weitere Vorteil einer nahezu verschwindenden Dispersion in den Lichtleitfasern, für die z.B. SSMF (Standard Single Mode Fibres) verwendet werden können. Das wiederum ist insbesondere bei Verwendung eines Pulslasers von großem Vorteil, um eine die Funktion der THz-Antennen vereitelnde Pulsverbreiterung zu vermeiden.

Die Verwendung eines Pulslasers als Laserlichtquelle zum Aktivieren der THz-Antennen ist insbesondere dann von Vorteil, wenn beide THz-Antennen photoleiterbasiert sind, da sich mit einem Pulslaser besonders gut eine hohe Sendeleistung und eine hohe Empfängerempfindlichkeit verwirklichen lassen. Für eine Ausführung des Terahertzsystems als Puls-System kann jeder Femtosekunden-Pulslaser geeigneter Wellenlänge verwendet werden.

Bei anderen Ausführungen kann die Laserlichtquelle durch einen Zweimodenlaser oder ein System zweier Laser gegeben sein und eingerichtet sein zur Erzeugung eines Schwebungssignals zweier Laserwellen, wobei eine Schwebungsfrequenz dieses Schwebungssignals mindestens 0,05 THz betragen sollte und typischerweise zwischen 0,05 THz und 20 THz, vorzugsweise zwischen 0,1 THz und 10 THz liegt, damit die Terahertzstrahlung mit entsprechender Frequenz und Wellenlänge erzeugt werden kann. Die Ausführung mit einem Zweimodenlaser oder einem System zweier Laser und die Aktivierung der THz-Antennen mit einem entsprechenden Schwebungssignal führt insbesondere dann zu befriedigenden Ergebnissen, wenn die Sendeantenne photodiodenbasiert ist, da sich durch die Verwendung einer photodiodenbasierten Sendeantenne das bei einer Aktivierung durch ein Schwebungssignal besonders gravierende Problem zu geringer Sendeleistungen vermeiden lässt.

Ausführungsbeispiele der Erfindung werden nachfolgend anhand der Figuren 1 bis 13 erläutert. Es zeigen
- Fig. 1: eine schematische Darstellung eines Terahertzsystems zum Erzeugen und kohärenten Detektieren von Terahertzstrahlung,
- Fig. 2: eine Aufsicht auf eine Empfängerantenne des Terahertzsystems aus Fig. 1,
- Fig. 3: einen Querschnitt durch einen Halbleiterchip der Empfängerantenne aus Fig. 2,
- Fig. 4: in einer der Fig. 3 entsprechenden Darstellung einen Querschnitt durch einen Halbleiterchip einer Empfängerantenne in einer Abwandlung der Ausführung aus den Fign. 2 und 3,
- Fig. 5: eine Aufsicht auf eine Sendeantenne des Terahertzsystems aus Fig. 1,
- Fig. 6: in diagrammatischer Darstellung eine Wellenlängenabhängigkeit eines Absorptionskoeffizienten einer aktiven Schicht einer Terahertzantenne,
- Fig. 7: ein Diagramm mit einem Verlauf einer Strahlungsintensität in Abhängigkeit von einer Eindringtiefe in eine photoempfindliche aktive Schicht verhältnismäßig großer Dicke,
- Fig. 8: in einer der Fig. 7 entsprechenden Darstellung einen Verlauf der Strahlungsintensität bei gleicher Wellenlänge, aber wesentlich geringerer Dicke der aktiven Schicht,
- Fig. 9: in einer den Fign. 7 und 8 entsprechenden Darstellung einen Verlauf der Strahlungsintensität bei der aktiven Schicht geringer Dicke aus Fig. 8 für Licht kürzerer Wellenlänge,
- Fig. 10: in einer der Fig. 1 entsprechenden Darstellung eine Aufsicht auf ein Terahertzsystem in einer anderen Ausführung,
- Fig. 11: einen Querschnitt durch einen Halbleiterchip einer Sendeantenne dieses Terahertzsystems,
- Fig. 12: eine perspektivische Darstellung einer Photodiode in dieser Sendeantenne und
- Fig. 13: eine perspektivische Darstellung der vollständigen Sendeantenne des Terahertzsystems aus Fig. 10.

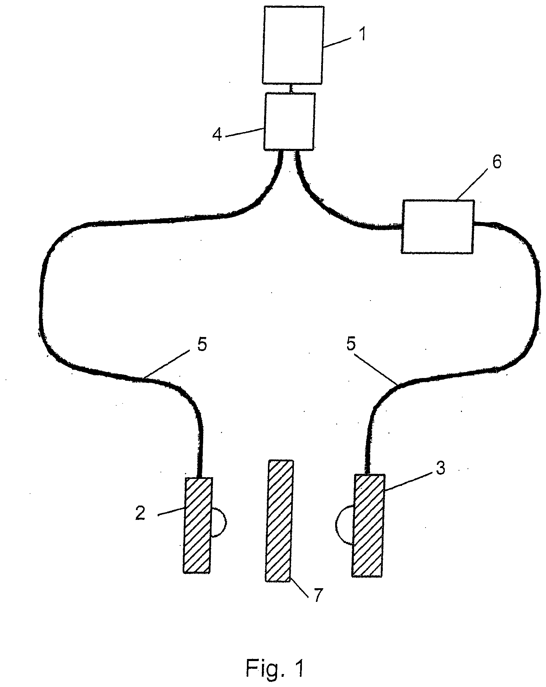

Das in Fig. 1 gezeigte Terahertzsystem weist eine Laserlichtquelle 1, eine Sendeantenne 2 und eine Empfängerantenne 3 auf. Bei der Sendeantenne 2 und der Empfängerantenne 3 handelt es sich jeweils um eine durch Licht der Laserlichtquelle 1 aktivierbare THz-Antenne. Dazu ist ein Strahlteiler 4 hinter einen Ausgang der Laserlichtquelle 1 geschaltet, wobei die Sendeantenne 2 und die Empfängerantenne 3 jeweils durch eine Lichtleitfaser 5 mit einem von zwei Ausgängen des Strahlteilers 4 verbunden sind.

Bei der Laserlichtquelle 1 handelt es sich um einen Pulslaser, wobei ein Schwerpunkt eines Modenkamms dieses Pulslasers im O-Band liegt. Eine als Schwerpunkt des Modenkamms definierte Wellenlänge der Laserlichtquelle 1 liegt dabei bei 1310 nm. Bei den Lichtleitfasern 5 handelt es sich um SSMF-Lichtleiter, beispielsweise vom Typ SMF 28, die bei dieser Wellenlänge einen Dispersionsnullpunkt haben. An einem Eingang oder in einem Verlauf einer der Lichtleitfasern 5 ist eine steuerbare optische Verzögerungsschaltung 6 angeordnet, mit der eine relative Zeitlage optischer Steuersignale zur Aktivierung der beiden THz-Antennen verschoben werden kann. Dazu kann die Verzögerungsschaltung 6 z.B. eine mit einem variablen elektrischen Feld beaufschlagbare Verzögerungsleitung aufweisen. Schließlich ist auch eine zwischen der Sendeantenne 2 und der Empfängerantenne 3 angeordnete Probe 7 dargestellt, die mit dem Terahertzsystem untersucht werden kann.

Der die Laserlichtquelle 1 bildende Pulslaser kann ein Faser-Pulslaser, z.B. mit Praseodymium-Dotierung, oder ein Halbleiter-Pulslaser, z.B. auf einem Materialsystem InGaAsP/InP basierend, sein. Da die Lichtleitfasern 5 bei der Wellenlänge der Laserlichtquelle 1 keine Dispersion zeigen, erübrigt sich eine Dispersionskompensation mit Gittern oder mit speziellen Fasern. Ein aufwendiger Abgleich einer Dispersionskompensation entfällt also, wobei Faserlängen der Lichtleitfasern 5 problemlos bis zu einigen Metern betragen und in der Länge verändert werden können.

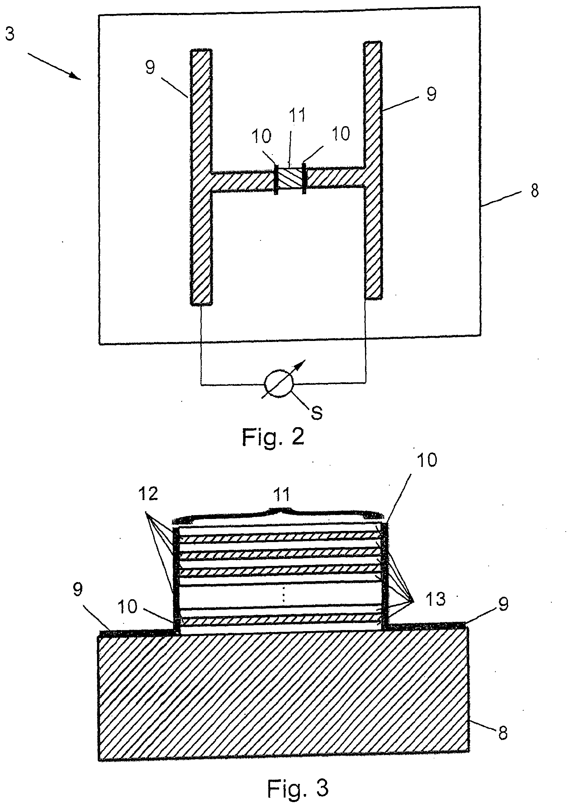

Fig. 2 zeigt die Empfängerantenne 3 des Terahertzsystems aus Fig. 1. Diese Empfängerantenne 3 basiert auf einem Halbleiterchip mit einem Substrat 8 aus InP. Dieses Substrat 8 trägt zwei Antennenleiter 9, die über jeweils einen elektrischen Kontakt 10 mit einem lichtempfindlichen Bereich 11 verbunden sind. Die Lichtleitfaser 5, die die Empfängerantenne 3 mit der Laserlichtquelle 1 verbindet, ist so geführt, dass die Laserlichtquelle 1 den lichtempfindlichen Bereich 11 durch die Lichtleitfaser 5 von oben beleuchten kann. Wenn dort Licht der Laserlichtquelle 1 einfällt, wird der lichtempfindliche Bereich 11 elektrisch leitend. Wenn die Empfängerantenne 3 gleichzeitig einem elektrischen Feld ausgesetzt ist, das auf eine zeitlich mit dem Licht der Laserlichtquelle 1 korrelierte elektromagnetische Welle zurückzuführen ist, wird daher ein elektrischer Strom zwischen den Wellenleitern 9 induziert. Dieser Strom ist mit einem nur schematisch dargestellten Sensor S messbar, der mit den Antennenleitern 9 verbunden ist. So kann mit der Empfängerantenne 3 eine Terahertzstrahlung, die mit der durch die Laserlichtquelle 1 aktivierten Sendeantenne 2 erzeugt wird, kohärent detektiert werden.

In Fig. 3 ist ein Ausschnitt der Empfängerantenne 3 als Querschnitt dargestellt, wobei dieser Ausschnitt insbesondere den lichtempfindlichen Bereich 11 umfasst. In diesem lichtempfindlichen Bereich 11 ist ein Photoleiter auf dem Substrat 8 angeordnet, der eine Vielzahl von zwischen 20 und 100 aktiven Schichten 12 umfasst. Diese aktiven Schichten 12 sind aus unter Umständen mit Beryllium dotiertem InGaAs gebildet und haben jeweils eine Schichtdicke von je nach Ausführung 12 nm, 10 nm, 8 nm oder auch nur 6 nm. Jede der aktiven Schichten 12 ist zwischen zwei angrenzenden Schichten 13 eingebettet, die eine Dicke von jeweils etwa 8 nm haben und aus dotiertem, mit Elektronenfallen oder Rekombinationszentren versehenem InAlAs gebildet sind. Die aktiven Schichten 12 und die daran angrenzenden Schichten 13, die epitaktisch auf das Substrat 8 aufgewachsen sind, bilden also eine periodische Schichtstruktur über dem Substrat 8 des Halbleiterchips. Eine Bandkantenwellenlänge der angrenzenden Schichten 13 beträgt ungefähr 900 nm und ist damit deutlich kleiner als die Wellenlänge der Laserlichtquelle 1. Die angrenzenden Schichten 13, die sich mit den aktiven Schichten 12 abwechseln, dienen hier als Rekombinationsschichten, die durch Lichteinfall frei gewordene Ladungsträger in den aktiven Schichten 12 aufgrund deren geringer Dicke sehr schnell wieder einfangen.

Diese entscheidende Wirkung der Rekombinationsschichten auf die Ladungsträger in den aktiven Schichten 12 ist umso besser, je dünner die aktiven Schichten 12 sind. Bei dünnen Schichten tritt nun aber der sog. Quantenbrunnen-Effekt auf, der zur Folge hat, dass die effektive Bandkantenwellenlänge sich mit dünner werdenden eingebetteten Schichten zu kleineren Wellenlängen hin verschiebt. Während dickes InGaAs auf einem InP-Substrat eine Bandkantenwellenlänge von 1650 nm hat, führen Dicken von 12 nm für die Schichten 12 in Fig. 3 zu einer effektiven Bandkantenwellenlänge von 1600 nm. Vorteilhaft für die Optimierung der Funktion der Rekombinationsschichten sind noch dünnere aktive Schichten von 10 nm, 8 nm oder 6 nm Dicke. Dabei verschiebt sich die Bandkantenwellenlänge aber weiter zu etwa 1550 nm, 1500 nm und 1450 nm, wobei sich diese Bandkantenwellenlängen durch geeignete Mischungsverhältnisse von Ga und In im InGaAs auch noch etwas vergrößern lassen. Bei den in herkömmlichen Terahertzsystemen für vergleichbare THz-Antennen zur Anregung eingesetzten Laserquellen mit Wellenlängen von 1550 nm würde damit keine Absorption mehr erfolgen. Für die bisherig genutzten Schichte mit 12 nm Dicke und einer Bandkante bei 1600 nm dagegen ist Lichtabsorption auch schon bei Wellenlängen von 1550 nm vorhanden, wobei die in Wärme umgesetzte Überschuss-Photonenenergie dann gering ist. Nach konventioneller Betrachtung stellt dies also eine sehr günstige Wellenlängen-Korrelation dar. Allerdings ist die Absorption in einer einzelnen, nur 12 nm dünnen, Schicht so gering, dass ein ausreichender Photoeffekt nur mit einer periodischen Wiederholung der Struktur erzielt wird. Realisiert worden sind z.B. 100 Perioden, was zu einer summierten Dicke der absorbierenden Schichten von 1,2 µm führt. Diese Dicke entspricht der Eindringtiefe des Lichtes bei dieser Wellenlänge. Die Herstellung des Schichtpaketes erfolgt in einem anspruchsvollen und langwierigen Epitaxie-Prozess in einer teuren Molekular-Strahl-Epitaxie-Anlage. Die Herstellung ist einfacher und kostengünstiger, wenn die Funktion mit weniger Schichten erreicht wird. Dies ist möglich, wenn die Laserwellenlänge, wie hier vorgeschlagen, ins Kurzwellige verschoben wird und so wie gefordert eine Wellenlängendifferenz von mindestens 200 nm, besser noch mindestens 250 nm, zur effektiven Bandkantenwellenlänge des absorbierenden Materials eingestellt wird. Die Eindringtiefe des Lichtes ist dann wesentlich geringer, und da eine summierte Dicke größer als diese Eindringtiefe keine Verbesserung bringt, kann die Zahl der Perioden nun wesentlichen reduziert werden auf z.B. nur noch 20 aktive Schichten 12. Bei kleinerer Periodenzahl und geringere Dicke des Gesamtpaketes ist auch eine aufwendige Mesa-Strukturierung und Seiten-Kontaktierung wie in Bild 3 nicht mehr notwendig, sondern es können einfachere planare Strukturen mit oben liegenden Kontakten wie in Bild 4 genutzt werden. Besonders vorteilhafte Wellenlängen bei Nutzung von Faserverbindungen zwischen Laserlichtquelle 1 und THz-Antennen liegen im Bereich um 1310 nm, dem sog. O-Band der Telekommunikation. Dort haben die Fasern nämlich eine Null-Dispersion, so dass die insbesondere bei Übertragung kurzer Pulse sonst notwendige und schwierige Dispersions-Kompensation entfällt. Bei Nutzung einer Wellenlänge von 1310 nm und einer aktiven Schichtdicke von 12 nm mit effektiver Bandkantenwellenlänge bei 1600 nm ist der Wellenlängenanstand mit 290 nm sehr groß. Dies bedeutet, dass die Vorteile der sehr guten und einfachen Übertragung der Pulse über die Faser kombiniert werden können mit den Vorteilen von Antennen mit sehr geringer Periodenzahl. Die vorteilhafte Laserwellenlänge um 1310 nm - natürlich können auch noch geringfügig kleinere Wellenlängen aus dem O-Band verwendet werden - eröffnet aber auch Spielraum, um den Effekt der Rekombinationsschichten durch noch dünnere aktive Schichten 12 zu optimieren. Auch bei Schichten mit 10 nm, 8 nm Dicke beträgt der Abstand der Laserwellenlänge zur effektiven Bandkantenwellenlänge bei geeignet gewähltem Mischungsverhältnis des InGaAs, das die aktiven Schichten 12 bildet, noch etwa 250 nm bzw. 200 nm und ist damit noch vorteilhaft groß für eine gute Lichtabsorption. Sogar bei Schichtdicken von nur 6 nm lässt sich dieser Abstand unter Umständen noch realisieren. Die vorteilhafte Laserwellenlänge 1310 nm kann also auch kombiniert werden mit optimierten dünnen Schichten bei nach wie vor großer Wellenlängendifferenz zur effektiven Bandkante der aktiven Schicht 12.

In Fig. 3 sind nur jeweils einige der Schichten 12 und 13 wiedergegeben, während ein innenliegender größerer Teil dieser Schichten 12 und 13 ausgelassen ist. Gut zu erkennen sind in Fig. 3 die elektrischen Kontakte 10, die mit den Antennenleitern 9 verbunden sind und den Photoleiter hier seitlich an Stirnflächen kontaktieren.

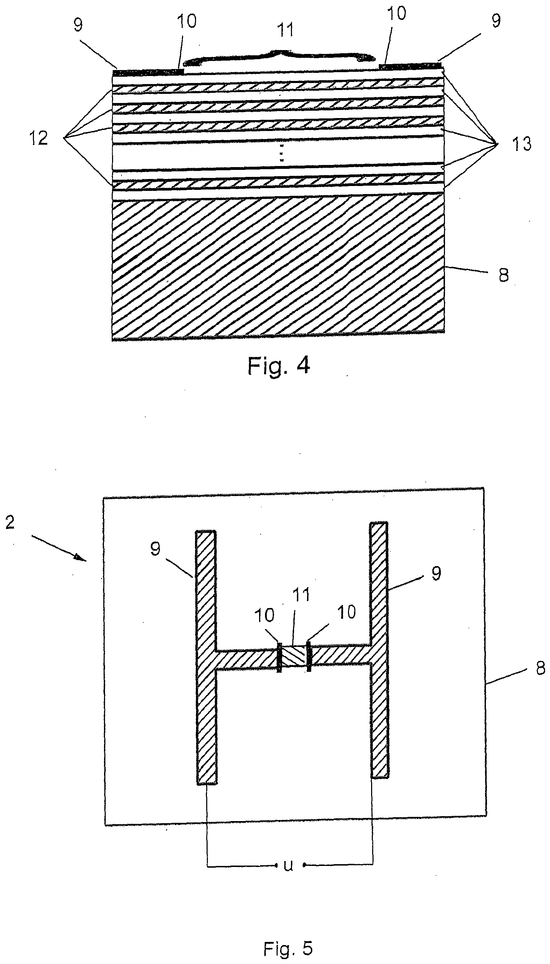

Fig. 4 zeigt einen Querschnitt durch einen dem Ausschnitt aus Fig. 3 entsprechenden Teil einer ähnlichen THz-Antenne, die anstelle der Empfängerantenne 3 aus den Fign. 2 und 3 verwendet werden kann und sich von dieser nur durch eine andere Kontaktierung des Photoleiters unterscheidet. Wiederkehrende Merkmale sind dabei wieder mit den gleichen Bezugszeichen versehen. Die den Photoleiter bildenden Schichten 12 und 13 können hier auch großflächiger und unter Umständen vollflächig auf das Substrat 8 aufgebracht sein. Abweichend von der in Fig. 3 gezeigten Ausführung wird der Photoleiter hier nicht an Stirnflächen, sondern an einer Oberfläche der obersten Schicht 13 kontaktiert.

In Fig. 5 ist die Sendeantenne 2 dargestellt, die sich von der Empfängerantenne 3 nur dadurch unterscheidet, dass die Antennenleiter 9 anstelle des Sensors S mit einer nur schematisch dargestellten Spannungsquelle verbunden sind. Merkmale, die den schon beschriebenen Merkmalen der Empfängerantenne 3 entsprechen, sind wieder mit den gleichen Bezugszeichen versehen. Dadurch, dass hier eine Spannung U an den Antennenleitern 9 anliegt, fließt ein kurzer Strompuls zwischen den Antennenleitern 9, sobald ein Lichtpuls von der Laserlichtquelle 1 auf den lichtempfindlichen Bereich 11 der Sendeantenne 2 trifft, was wiederum dazu führt, dass die Sendeantenne 2 eine elektromagnetische Welle aussendet, die entsprechend einer im Femtosekundenbereich liegenden Pulslänge (typischerweise im Bereich wenige 100 fs und darunter) des Lichtpulses eine im Terahertzbereich liegende Frequenz hat und die mit der zuvor beschriebenen Empfängerantenne 3 kohärent detektiert werden kann.

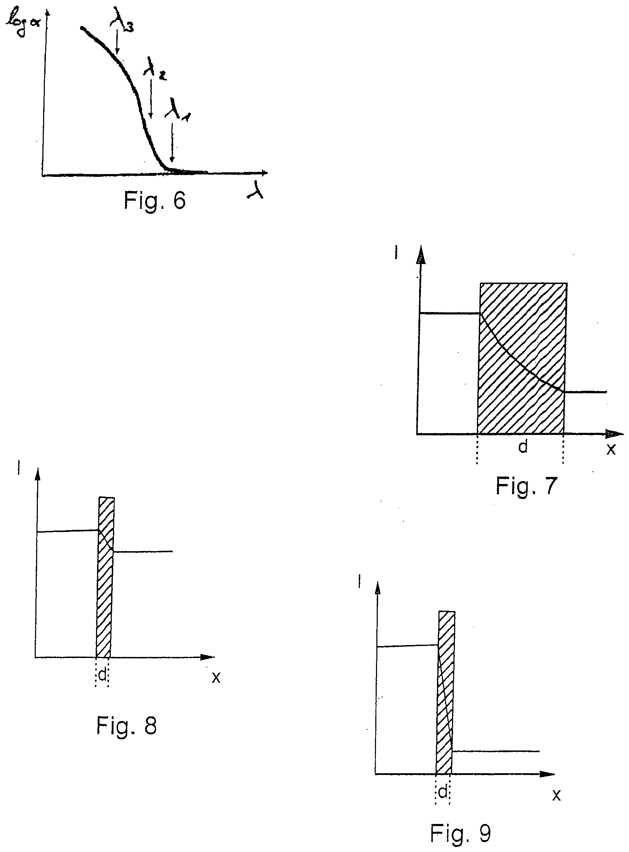

Fig. 6 zeigt in logarithmischer Darstellung eine Abhängigkeit eines Absorptionskoeffizienten α der aktiven Schichten 12 von einer Wellenlänge λ einfallenden Lichts. Gut zu erkennen ist, dass ein Verlauf des Absorptionskoeffizienten α bei der hier mit λ₁ gekennzeichneten Bandkantenwellenlänge der aktiven Schichten 12 einen Knick zeigt. Für größere Wellenlängen λ sind die aktiven Schichten 12 transparent, weil eine Photonenenergie entsprechenden Lichts nicht ausreicht, um ein Elektron aus einem Valenzband in ein Leitungsband zu heben. Zu geringeren Wellenlängen λ hin ist dagegen, ausgehend von der Bandkantenwellenlänge, ein steiler Anstieg des Absorptionskoeffizienten α zu erkennen. Bei herkömmlichen Terahertzsystemen werden zum Aktivieren der THz-Antennen Lichtquellen mit Wellenlängen verwendet, die nur geringfügig kleiner sind als die Bandkantenwellenlänge eines photoempfindlichen Materials der THz-Antennen, und zwar ganz bewusst, um eine Wärmeentwicklung in dem photoempfindlichen Material weitestmöglich zu verhindern. Dem liegt die Erkenntnis zugrunde, dass ein durch eine Differenz zwischen einer Photonenenergie des zum Aktivieren verwendeten Lichts und einem Bandabstand zwischen Valenzband und Leitungsband gegebener Energieüberschuss in Wärme umgewandelt wird. Eine für herkömmliche Terahertzsysteme typische Anregungswellenlänge ist in Fig. 6 als λ₂ gekennzeichnet. Für Licht dieser Wellenlänge ist der Absorptionskoeffizient α noch verhältnismäßig klein.

In Fig. 7 ist gezeigt, wie Licht der Wellenlänge λ₂ in einer Schicht absorbiert wird, die aus dem gleichen Material besteht wie die aktiven Schichten 12, dabei jedoch eine verhältnismäßig große Dicke d aufweist. Dabei ist eine Strahlungsintensität I in Abhängigkeit von einer Ortskoordinate x gezeigt, wobei eine x-Achse des entsprechenden Koordinatensystems auf der genannten Schicht senkrecht steht. Durch die verhältnismäßig große Dicke d wird, trotz des für diese Wellenlänge λ₂ kleinen Absorptionskoeffizienten α, ein Großteil des Lichts in der Schicht absorbiert. Die in Fig. 7 dargestellten Verhältnisse entsprechen denen bei einer Verwendung herkömmlicher Photoleiter zur Realisierung einer THz-Antenne. Da die Photonenenergie hier nur gerade zum Auslösen eines Photoeffekts hinreichend ist, wird dabei eine Effizienz des Photoeffekts optimiert.

Fig. 8 zeigt in einer der Fig. 7 entsprechenden Darstellung den Verlauf der Strahlungsintensität I bei einer geringeren Schichtdicke d, die anzustreben ist, um den Photoleiter hinreichend schnell für eine effiziente Erzeugung oder Detektion von Terahzstrahlung mit THz-Antennen beschriebener Art zu machen. Wie sich aus dem Verlauf der Strahlungsintensität I in Fig. 8 ergibt, wird das Licht bei der nahe der Bandkantenwellenlänge liegenden Wellenlänge λ₂ nur noch zu einem sehr geringen Anteil absorbiert, weshalb eine nur entsprechend geringe Anzahl von Ladungsträgern ins Leitungsband gehoben wird. Trotz des bei dieser Wellenlänge λ₂ prinzipiell in der Energiebilanz sehr effektiven Photoeffekts werden wegen der sehr dünnen Schichten nur wenige Photoladungsträger erzeugt, und es ergibt sich damit nur eine sehr geringe Effizienz der entsprechenden auf einem opto-elektronischen Halbleiterchip basierenden THz-Antenne.

Fig. 9 schließlich zeigt in einer den Fign. 7 und 8 entsprechenden Darstellung den Verlauf einer Strahlungsintensität I bei der gleichen geringen Schichtdicke d wie in Fig. 8 für den Fall, das Licht der Laserlichtquelle 1 mit der deutlich kleineren Wellenlänge verwendet wird, die in Fig. 6 als λ₃ eingezeichnet ist. Wegen des größeren Absorptionskoeffizienten α wird hier trotz der geringen Schichtdicke d ein sehr großer Anteil des Lichts absorbiert und dementsprechend eine verhältnismäßig große Anzahl von Ladungsträgern ins Leitungsband gehoben. Das veranschaulicht, warum die THz-Antennen des Terahertzsystems aus Fig. 1 durch die Aktivierung mit der Laserlichtquelle 1 sehr effizient arbeiten, auch wenn der Photoeffekt hier in der Energiebilanz weniger effizient ist, da er von einer größeren Wärmeerzeugung begleitet ist.

Ausgangspunkt der hier vorgeschlagenen Lösung ist es also, sich von der Verwendung von Femtosekunden-Lasern, deren Wellenlängen nur geringfügig über der Bandkantenwellenlänge der verwendeten photoempfindlichen Materialien liegen, zu lösen und die photoempfindlichen Schichten der Terahertzantennen nicht unbedingt mit einer solchen Bandkante zu gestalten, dass die Laserwellenlängen gerade noch absorbiert werden können und dadurch die Effizienz des Photoeffekts optimiert wird. Als wichtigstes Ziel wird vielmehr eine Optimierung sowohl einer Bandbreite realisierbarer Terahertzfrequenzen als auch eine Effizienz der opto-elektronischen Halbleiterchips bei der Wandlung von Licht in Terahertzstrahlung bzw. bei der kohärenten Detektion der Terahertzstrahlung in den Vordergrund gestellt. Dabei ist mehr als die Effizienz des Photoeffektes zu berücksichtigen, so dass sich neue Optimierungsrichtlinien ergeben.
Die Terahertzeffizienz wird dabei durch folgende Maßnahmen verbessert: Die in den THz-Antennen verwendeten photoempfindlichen Schichten (aktive Schichten 12) werden mit möglichst kleiner Bandkantenenergie (Bandlücke), also möglichst großer Bandkantenwellenlänge, entwickelt und genutzt - bevorzugt basierend auf InGaAs über einem InP-Substrat -, und zur Anregung wird Laserlicht mit Photonenenergien weit oberhalb der Bandkantenenergie eingesetzt. Materialien mit möglichst großer Bandkantenwellenlänge sollen also mit möglichst kurzwelligen Lasern angeregt werden.

Die photoempfindlichen Schichten werden dann möglichst dünn gestaltet, was die Terahertz-FrequenzCharakteristik verbessern kann. Gleichzeitig soll das Laserlicht jedoch für eine hohe Effizienz stark absorbiert werden, was durch die große Wellenlängendifferenz und einen hohen Absorptionskoeffizienten ermöglicht wird. Besonders wichtig ist der große Bandkantenabstand insbesondere bei dünnen Schichten im Nanometerbereich, z.B. in InGaAs/InAlAs-Multischicht-Photoleitern der in den Fign. 3 und 4 gezeigten Art, die durch den Quantenbrunneneffekt sonst sogar transparent werden könnten. Die Kurzwelligkeit des Laserlichts muss aber so begrenzt werden, dass bei der oft vorteilhaften Einbettung der photoempfindlichen Schichten zwischen Grenzschichten mit größerem Bandabstand keine wesentlichen Absorptionen auftreten, damit Lichtverluste an falscher Stelle vermieden werden.

Eine weitere Begrenzung der Laserwellenlänge ist durch die Forderung nach faserverbundenen Systemen begründet. Damit die Übertragung von Pulsen hier ohne aufwendige Zusatzmaßnahmen wie Freistrahl-Gitter-Anordnungen möglich ist, sollen für die Laserwellenlängen entweder DCFs (dispersion compensating fibers) verfügbar sein oder Fasern mit einer verschwindenden Dispersion. Daher sind Wellenlängen im sogenannten O-Band bei 1310 nm optimal, weil hier eine Null-Dispersion der SSMF vorliegt, ein hinreichend großer Wellenlängenabstand zur Bandkantenwellenlänge des bevorzugten Materials InGaAs auf InP gegeben ist und die üblichen Grenzflächen hier transparent gestaltet werden können.

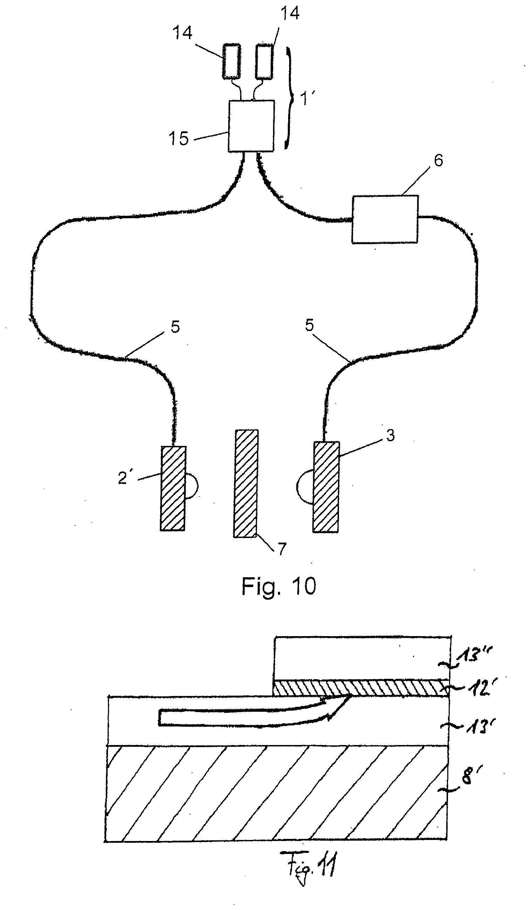

In Fig. 10 ist ein weiteres Terahertzsystem gezeigt, das sich von dem zuvor beschriebenen Terahertzsystem durch eine andere Laserlichtquelle 1' sowie eine andere Sendeantenne 2' unterscheidet. Wiederkehrende Merkmale sind hier wieder mit den gleichen Bezugszeichen versehen. Insbesondere wird die gleiche Empfängerantenne 3 verwendet. Hier ist die Laserlichtquelle 1' durch ein System mit zwei einzelnen Lasern 14 geringfügig unterschiedlicher Wellenlängen und einem Koppler 15 mit zwei Eingängen und zwei Ausgängen zum Überlagern von Laserstrahlung der beiden Laser 14 und zum Einspeisen eines so erzeugten Schwebungssignals in die Lichtleitfasern 5 gegeben. Das Schwebungssignal hat dabei eine Schwebungsfrequenz von etwa 1 THz, wobei diese Schwebungsfrequenz auch verstellt werden kann, wenn sich die Wellenlänge mindestens eines der beiden Laser 14 steuern lässt. Anstelle der so aufgebauten Laserlichtquelle 1' kann auch ein Zweimodenlaser zum Erzeugung des Schwebungssignals und zum Einspeisen desselben in die Lichtleitfasern 5 verwendet werden.

Die Sendeantenne 2' ist auch hier durch einen opto-elektronischen Halbleiterchip realisiert, basiert jedoch abweichend von dem zuvor beschriebenen Ausführungsbeispiel auf einer Photodiode, von der in Fig. 11 ein Querschnitt gezeigt ist. Auch hier ist eine photoempfindliche aktive Schicht 12' über einem aus InP gebildeten Substrat 8' des Halbleiterchips angeordnet. Die aktive Schicht 12' ist aus undotiertem InGaAs gebildet und hat eine Schichtdicke von etwas weniger als 100 nm. Die aktive Schicht 12' hat dabei eine Bandkantenwellenlänge von etwa 1650 nm, die deutlich größer ist als eine Wellenlänge der Laserlichtquelle 1', die zwischen 1260 nm und 1360 nm beträgt und vorzugsweise in diesem Bereich verstellbar ist.

Von dem Substrat 8' ist die aktive Schicht 12' durch eine daran angrenzende Schicht 13' getrennt, die aus n-dotiertem InGaAsP gebildet ist. Über der aktiven Schicht 12' ist eine weitere daran angrenzende Schicht 13" aus p-dotiertem InGaAsP angeordnet. Statt InGaAsP könnte auch entsprechend dotiertes InGaAlAs für die Schichten 13' und 13" verwendet werden. Die Schichten 13' und 13" sind dabei so ausgeführt, dass eine Bandkantenwellenlänge dieser Schichten 13' und 13" etwa 1200 nm beträgt und damit deutlich kleiner ist als die Wellenlänge der Laserlichtquelle 1'.

Die an die aktive Schicht 12' angrenzenden Schichten 13' und 13" dienen nicht nur zur Realisierung eines p-n-Übergangs der Photodiode und als deren Kontaktschichten. Darüber hinaus dient die für das Licht der Laserlichtquelle 1' transparente Schicht 13' als Wellenleiterschicht, in die das Licht der Laserlichtquelle 1' horizontal eingespeist wird. Dieses Licht ist in Fig. 11 durch einen Pfeil veranschaulicht. Wie in Fig. 11 gut erkennbar ist, propagiert das Licht der Laserlichtquelle 1', das durch eine der beiden Lichtleitfasern 5 an eine Stirnfläche des Halbleiterchips der Sendeantenne 2' herangeführt wird, durch die Schicht 13' und gelangt so an die aktive Schicht 12', wo es absorbiert wird und die in Sperrrichtung unter Vorspannung stehende Photodiode leitend macht. Das wiederum führt bei der gewählten Schwebungsfrequenz des Lichts der Laserlichtquelle 1' zur Erzeugung von Terahertzstrahlung, die von der Sendeantenne 2' ausgeht.

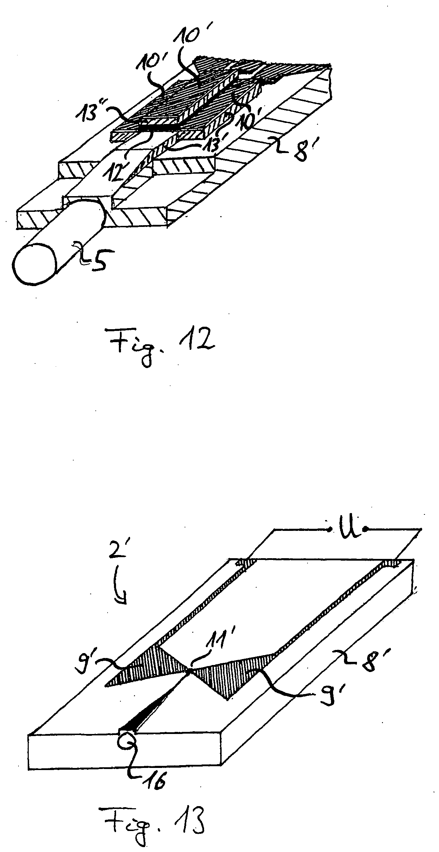

In Fig. 12 ist ein Ausschnitt der Sendeantenne 2' zusammen mit einem Ende der Lichtleitfaser 5 perspektivisch dargestellt. Dieser Ausschnitt umfasst insbesondere die beschriebene Photodiode, wobei wiederkehrende Merkmale wieder mit den gleichen Bezugszeichen versehen sind. Die verschiedenen Komponenten der Sendeantenne 2' sind dabei nicht maßstabsgetreu wiedergegeben. Erkennbar sind hier auch elektrische Kontakte 10', die auf den an die aktive Schicht 12' angrenzenden Schichten 13' und 13" angeordnet sind.

In Fig. 13 ist der die Sendeantenne 2' bildende Halbleiterchip vollständig zu sehen. Zu erkennen sind hier auch zwei Antennenleiter 9', die auf dem Substrat 8' angeordnet und von diesem durch eine dünne Isolationsschicht getrennt sind. Über die Kontakte 10' ist einer der Antennenleiter 9' mit der n-dotierten Schicht 13' und der andere Antennenleiter 9' mit der p-dotierten Schicht 13" verbunden. Die in den Fign. 11 und 12 dargestellte Photodiode, die um Größenordnungen kleiner ist als die Antennenleiter 9', befindet sich zwischen diesen Antennenleitern 9' und bildet einen lichtempfindlichen Bereich 11' der Sendeantenne 2'. Nur schematisch dargestellt ist in Fig. 13 auch eine Verbindung der Sendeantenne 2' mit einer Spannungsquelle, die über zwei Leiterbahnen mit den Antennenleitern 9' verbunden ist und durch die die Photodiode unter Spannung gesetzt wird. An einer Stirnfläche des Substrats 8' ist eine Einkoppelfläche 16 zu erkennen, die optisch mit einem Ausgang der Lichtleitfaser 5 gekoppelt wird.

Geschwindigkeit und Frequenzverhalten von Photodioden sind wesentlich bestimmt von der Transitzeit der erzeugten Photoladungsträger aus der absorbierenden Schicht zu den p- bzw. n-dotierten Grenzschichten mit größerem Bandabstand. Die Transitzeit wird üblicherweise verbessert durch eine in Sperrrichtung angelegte Spannung. Technologisch lässt sich die Transitzeit weiter minimieren durch Reduzieren der Wegstrecke für die Ladungsträger, d.h. durch dünnere absorbierende Schichten. Damit nehmen aber auch Lichtabsorption und Effizienz drastisch ab. Eine erste Maßnahme dagegen ist es, die Schicht nicht senkrecht, sondern wie hier beschrieben seitlich zu beleuchten. Eine längere Ausführung der Schichten würde die Absorption erhöhen, jedoch zu einer Mittlung über die Lichtmodulation führen, was das Frequenzverhalten verschlechtern würde. Eine bessere Maßnahme ist deshalb auch hier die Nutzung kürzerer Wellenlängen zum Anregen der aktiven Schicht 12', die bei kürzeren Wellenlängen einen höheren Absorptionskoeffizienten hat. Die in den Fign. 6-9 gezeigten Zusammenhänge gelten also auch für die Sendeantenne 2'. Die photoempfindliche Schicht 12' ist eingebettet zwischen einem p-n-Übergang aus den Schichten 13' und 13" mit größerem Bandabstand, also einer kleineren Bandkantenwellenlänge. Lichtabsorption in diesen Schichten 13' und 13" würde die Funktion und Effizienz der Photodiode stören und wird deshalb vermieden, indem die Wellenlänge der Laserlichtquelle 1' größer gewählt wird als die Bandkantenwellenlänge der Schichten 13' und 13". Ein guter Kompromiss zwischen Funktion und Transparenz der angrenzenden Schichten 13' und 13" wird durch Bandkantenwellenlängen dieser Grenzschichten im Bereich von 1150 nm bis 1200 nm erreicht. Dadurch lässt sich die Sendeantenne 2' bei einer Ansteuerung im O-Band effizient betreiben.

Bei dem in Fig. 10 gezeigten Terahertzsystem handelt es sich um ein fasergekoppeltes Continuous-Wave-Terahertzsystem (CW-System), bei dem die Terahertzantennen durch Laserlicht im Bereich 1310 nm ± 50 nm angesteuert werden und das dabei sehr effizient arbeitet. Das von den Lasern 14, von denen mindestens einer in der Wellenlänge abstimmbar ist, in die Lichtleitfasern 5 eingekoppelte Licht wird zuvor in dem Koppler 15 unter gleicher Polarisation überlagert, um das Schwebungssignal zu erzeugen. Durch die Verzögerungsschaltung 6, die durch eine Verzögerungsleitung oder durch eine Phasenmodulations-Einrichtung für eine der beiden Wellenlängen der beiden Laser 14 gegeben sein kann, ist ein Zeit- bzw. Phasenversatz zwischen den beiden Ausgangssignalen, die zum Aktivieren der Terahertzantennen verwendet werden, kontrolliert einstellbar und modulierbar.

Eine für die Realisierung der vorgeschlagenen Terahertzsysteme zentrale Erkenntnis ist, dass die Bedeutung eines trivial erscheinenden Parameters zur Optimierung der Chips bisher nicht erkannt oder sogar falsch interpretiert wurde. Dieser Parameter ist die Wellenlängen- oder Energiedifferenz zwischen dem anregenden Licht und der Bandkante des absorbierenden Materials. Hier wurde bisher eine möglichst große, aber noch absorbierende Wellenlänge des Lichts als vorteilhaft angesehen, weil damit eine gegebene Lichtleistung in eine größtmögliche Zahl Elektron-Loch-Paare umgesetzt wird, d.h. die Effizienz der Umsetzung optischer Leistung in Photoladungsträger optimal ist. Bei kürzeren Wellenlängen und höheren Photonenenergien dagegen werden weniger Ladungsträger erzeugt, und die Überschussenergie führt zu einer Zusatzerwärmung, was nicht ohne Grund als ungünstig angesehen wurde.

Ein völlig anderes Bild ergibt sich, wenn man die Optimierung der Photomischer, also der THz-Antennen als ganzer, in den Vordergrund stellt. Im Folgenden wird ausgeführt, warum möglichst dünne absorbierende Schichten ein wichtiger Schlüsselparameter zur Optimierung der Geschwindigkeit sowohl der Photoleiter als auch der Photodioden ist. Die dünnen Schichten müssen aber das anregende Licht ausreichend stark absorbieren, sonst geht die Effizienz verloren. Dünne Schichten (Geschwindigkeit) und hohe Lichtabsorption (Effizienz) kann man gleichzeitig erreichen, wenn man Wellenlängen nutzt, die möglichst kurzwellig sind, also energetisch möglichst weit oberhalb der Bandkante liegen. Die Bandkante ist - anders als der Name vielleicht vermuten lässt - keine Stufenfunktion, die von Transparenz auf einen hohen, festen Absorptionskoeffizienten springt. Vielmehr beginnt im Bandkantenbereich ein steiler Anstieg des Absorptionskoeffizienten, der sich weit über den Bandkantenbereich hinaus ins Hochenergetische, Kurzwellige fortsetzt. Das ist in Fig. 6 gut zu erkennen. Es ist also festzustellen, dass bei immer kürzeren Wellenlängen des Lichtes der Absorptionskoeffizient immer größer wird und so auch bei für hohe Geschwindigkeit optimierten sub-µm-dünnen Schichten eine starke Lichtabsorption und damit eine hohe Effizienz erreicht werden kann.

Bei der technologischen Realisierung der Komponenten oder dem Aufbau des Terahertzsystems können nun aber auch Begrenzungen auftreten, die einer beliebig weiten Verschiebung der Lichtwellenlänge Grenzen setzen. Für fasergekoppelte Puls- und CW-System und bei Nutzung von photoempfindlichen Schichten aus InGaAs auf InP liegt der optimale Wellenlängenbereich bei 1310 nm ± 50 nm im sogenannten O-Band der Telekommunikation.

Photoleiter für herkömmliche Fasersysteme bei 1550 nm basieren auf LT-InGaAs-Nanoschichten, die zwischen InAlAs-Schichten mit tiefen Haftstellen eingebettet sind, gewachsen mit einer MBE auf InP-Substrat. Der benötigte Effekt der InAlAs-Grenzschichten wirkt umso stärker, je dünner die InGaAs-Photoleiterschicht ist. In bereits etablierten Strukturen ist das InGaAs 12 nm dick. Um bei diesen dünnen Schichten eine ausreichend hohe Absorption zu erreichen, werden die Strukturen periodisch wiederholt, z.B. 100-mal, so dass sich eine Gesamtdicke des InGaAs von 1,2 µm ergibt.

Eine weitere Reduzierung der InGaAs-Schichtdicke würde prinzipiell zu einer weiteren Optimierung des InAlAs-Effektes und der Komponenteneigenschaft führen. Eine Reduzierung der InGaAs-Dicke führt aber zu einem immer stärkeren "Quantum-Well"-Effekt (Quantenbrunneneffekt). Das heißt, dass sich die Subband-Energieniveaus des dünnen InGaAs von 1650 nm durch den Quantum-Well-Effekt auf ca. 1600 nm verschieben. Bei weiterer Reduzierung der Schichtdicke wird das Material schließlich transparent für 1550 nm, die Optimierung durch dünnere Schichten ist bei 1550-nm-Licht daher nicht möglich. Nutzt man allerdings kürzere Wellenlängen, wie hier vorgeschlagen, dann ist eine Optimierung der InGaAs/InAlAs-Photoleiter möglich. So ist auch bei dünneren Schichten und größerem "Quantum-Well"-Effekt die Bandkantenwellenlänge (z.B. 1550 nm) noch ausreichend entfernt von der Laserwellenlänge, so dass eine gute Absorption bei 1310 nm vorhanden ist (erst recht bei noch kürzeren Wellenlängen).

Zu bemerken ist, dass kürzere Wellenlängen und dünne absorbierende Schichten auch bei konventionellen Photoleiterschichten ohne "Quantum-Well"-Effekt sinnvoll sind. Die Photoladungsträger werden dann oberflächennah erzeugt, und elektrische Felder durch Oberflächenkontakte wirken effektiv. Besonders vorteilhaft ist dies bei sogenannten Fingerkontakten, bei denen der Abstand der elektrischen Kontakte nur ca. 1 µm ist. Für die Photoladungsträger, die erst in 1 oder 2 µm Tiefe erzeugt werden, ist der Weg zu den Kontakten weiter, und die elektrischen Felder wirken wesentlich geringer in der Tiefe des Materials. Es kann gezeigt werden, dass Mesa-Strukturierungen und Seitenkontakte der in Fig. 3 gezeigten Art hier ganz erhebliche wesentliche Verbesserung bewirken können. Diese Mesa-Strukturierungen sind aber technologisch sehr aufwendig und bei den schmalen Fingerkontakten schwierig zu realisierem. Oberflächennahe Erzeugung der Photoladungsträger durch kurzwellige Anregung ist deshalb eine sinnvolle Maßnahme zur Verbesserung der Funktion und Effektivität der schnellen Photoleiter.

Bei Mehrschichtstrukturen gibt es Grenzen für eine sinnvolle kurzwellige Wellenlängenverschiebung, bedingt durch die einsetzende Absorption der umgebenden Schichten. Für das InAlAs wäre das allerdings erst bei Wellenlängen von weniger als 1000 nm der Fall.

Für das O-Band existieren Faserverstärker auf Basis von Praseodymium-Dotierung. Als Alternative sind auch modengekoppelte Halbleiterlaser denkbar. Entsprechende Pulslaser mit Wellenlängen von 1310 nm sind insbesondere auch auf InP-Basis möglich.

In faserbasierten CW-Systemen werden vorzugsweise Photodioden mit integrierten THz-Antennen als leistungsstarke Sender eingesetzt, während die oben beschriebenen Photoleiter als kohärente Empfänger dienen.

Auch für Photodioden sind möglichst dünne absorbierende Schichten zur Optimierung der Funktionsgeschwindigkeit anzustreben. Die Geschwindigkeit von Photodioden ist transitzeitbegrenzt. Das heißt, in einer undotierten Absorberschicht werden Photoladungsträger erzeugt, die sich dann zu den darüber bzw. darunter liegenden p- bzw. n-dotierten Schichten (die einen größeren Bandabstand haben) bewegen müssen. Die Dicke der Absorberschicht ist wieder ein wichtiger Optimierungsparameter. Aber auch hier gilt, dass bei dünnen Schichten die Absorption und die Effektivität abnehmen. Ein erster Schritt zur Verbesserung ist die seitliche Einstrahlung in dünne Schichten. Die Absorberschicht ist dann typischerweise oberhalb einer Wellenleiterschicht integriert. Das Licht aus einer Glasfaser wird - unterstützt von einem integrierten sogenannten "Taper" - an der Facette in den Wellenleiter eingestrahlt und koppelt dann nach einer bestimmten Wegstrecke in die darüber liegende Absorberschicht. Auch bei typischen 0,3 µm dünnen Absorberschichten kann durch größere Längen (7 µm bis 20 pm) ausreichende Absorption erreicht werden.

Der Terahertz-Einsatz erfordert höhere Frequenzen als Telekommunikationsanwendungen. Noch dünnere absorbierende Schichten sind deshalb erwünscht. Die Länge kann dabei aber nicht weiter vergrößert werden, da die Absorberlänge deutlich kürzer sein muss als die Wellenlänge des anregenden optischen Schwebungssignals, um eine Glättung der Modulationen zu vermeiden.

Auf dem Weg zu schnellen Photodioden mit dünnen, aber effektiven Absorberschichten sind auch hier möglichst kurze Wellenlängen des optischen Steuersignals anzustreben. Limitierend sind auch hier die Grenzschichten des Absorbers. Die Wellenleiter im InP-MaterialSystem erfordern typisch eine Bandkante bei 1150 nm bis 1200 nm (oder langwelliger). Licht von Wellenlängen unterhalb von ca. 1250 nm wird im Wellenleiter absorbiert und erreicht so nicht oder nur stark geschwächt den Absorber.

Auch für CW-Systeme gibt es so eine kurzwellige Grenze. Optimal ist auch hier die Ansteuerung durch Schwebungssignale mit Schwerpunkt im O-Band 1310 nm ± 50 nm und die Optimierung von Photodiode und Photoleitern für diesen Wellenlängenbereich unter Einsatz möglichst dünner absorbierender Schichten.

## Patentansprüche

1. Terahertzsystem zum Erzeugen und kohärenten Detektieren von Terahertzstrahlung, umfassend
eine Laserlichtquelle (1; 1') und zwei jeweils über eine Lichtleitfaser (5) optisch mit der Laserlichtquelle (1; 1') gekoppelte und durch Licht dieser Laserlichtquelle (1; 1') aktivierbare THz-Antennen, von denen eine erste als Sendeantenne (2; 2') und eine zweite als Empfängerantenne (3) dient,
wobei die THz-Antennen jeweils einen mit Antennenleitern (9; 9') kontaktierten Halbleiterchip aufweisen, der mindestens eine aktive Schicht (12; 12') mit einer Bandkantenwellenlänge, die größer ist als eine Wellenlänge der Laserlichtquelle (1; 1'), und mindestens zwei an die aktive Schicht (12; 12') angrenzende Schichten (13; 13', 13") mit einer Bandkantenwellenlänge, die kleiner ist als die Wellenlänge der Laserlichtquelle (1; 1'), umfasst,
wobei die mindestens eine aktive Schicht (12; 12') mindestens einer der THz-Antennen zwischen zwei der angrenzenden Schichten (13; 13', 13") angeordnet ist und eine Dicke hat, die höchstens einer Eindringtiefe des Lichts der Laserlichtquelle (1; 1') entspricht, wobei die Eindringtiefe durch einen Intensitätsabfall auf einen Anteil von 1/e einer einfallenden Strahlungsintensität (I) definiert ist, wobei ein diese mindestens eine aktive Schicht (12; 12') bildendes Halbleitermaterial eine Bandkantenwellenlänge von mindestens 1600 nm hat,
**dadurch gekennzeichnet,**
**dass** die Bandkantenwellenlänge zumindest dieser mindestens einen aktiven Schicht (12; 12') mindestens einer der THz-Antennen mindestens 250 nm größer ist als die Wellenlänge der Laserlichtquelle (1; 1').

2. Terahertzsystem nach Anspruch 1, **dadurch gekennzeichnet, dass** ein die aktive Schicht (12; 12') mindestens einer der THz-Antennen bildendes Halbleitermaterial InGaAs enthält.

3. Terahertzsystem nach einem der Ansprüche 1 oder 2, **dadurch gekennzeichnet, dass** mindestens eine der THz-Antennen auf einem Photoleiter basiert.

4. Terahertzsystem nach einem der Ansprüche 1 bis 3, **dadurch gekennzeichnet, dass** die Sendeantenne (2) auf einer Photodiode basiert.

5. Terahertzsystem nach einem der Ansprüche 1 bis 4, **dadurch gekennzeichnet, dass** mindestens eine an die aktive Schicht (12; 12') angrenzende Schicht (13; 13', 13") InGaAsP oder InAIAs oder InGaAlAs enthält.

6. Terahertzsystem nach einem der Ansprüche 1 bis 5, **dadurch gekennzeichnet, dass** mindestens eine der angrenzenden Schichten (13', 13") mindestens einer der THz-Antennen als Wellenleiter dient, in den das Licht der Laserlichtquelle (1') in einer durch die Schicht (13') definierten Ebene propagierend eingekoppelt wird.

7. Terahertzsystem nach einem der Ansprüche 1 bis 6, **dadurch gekennzeichnet, dass** die Wellenlänge der Laserlichtquelle (1; 1') zwischen 1260 nm und 1360 nm liegt.

8. Terahertzsystem nach einem der Ansprüche 1 bis 7, **dadurch gekennzeichnet, dass** die Laserlichtquelle (1; 1') durch einen Pulslaser gegeben ist oder durch einen Zweimodenlaser oder ein System zweier Laser (14) zur Erzeugung eines Schwebungssignals zweier Laserwellen einer Schwebungsfrequenz von mindestens 0,1 THz.

## Claims

1. A terahertz system for producing and coherently detecting terahertz radiation, comprising:
a laser light source (1; 1') and two THz antennas, which are each optically coupled to the laser light source (1; 1') via an optical fiber (5) and can be activated by light of this laser light source (1; 1'), of which a first THz antenna serves as a transmitting antenna (2; 2') and a second THz antenna serves as a receiving antenna (3),
each of the THz antennas comprising a semiconductor chip that is contacted by antenna conductors (9; 9') and comprises at least one active layer (12; 12') having a band edge wavelength that is greater than a wavelength of the laser light source (1; 1'), and at least two
layers (13; 13'; 13") abutting the active layer (12; 12') and having a band edge wavelength that is smaller than the wavelength of the laser light source (1; 1'),
the at least one active layer (12; 12') of at least of one of the THz antennas being arranged between two of the abutting layers (13; 13'; 13") and having a thickness that corresponds to no more than a penetration depth of the light of the laser light source (1; 1'), the penetration depth being defined by a drop in intensity to a share of 1/e of an incident radiation intensity (I), a semiconductor material forming this at least one active layer (12; 12') having a band edge wavelength of at least 1600 nm,
**characterized in that**
the band edge wavelength of at least this at least one active layer (12; 12') of at least one of the THz antennas is at least 250 nm greater than the wavelength of the laser light source (1; 1').

2. The terahertz system according to claim 1, **characterized in that** a semiconductor material forming the active layer (12; 12') of at least one of the THz antennas comprises InGaAs.

3. The terahertz system according to any one of claims 1 or 2, **characterized in that** at least one of the THz antennas is based on a photoconductor.

4. The terahertz system according to any one of claims 1 to 3, **characterized in that** the transmitting antenna (2) is based on a photodiode.

5. The terahertz system according to any one of claims 1 to 4, **characterized in that** at least one layer (13; 13'; 13") abutting the active layer (12; 12') comprises InGaAsP or InAIAs or InGaAIAs.

6. The terahertz system according to any one of claims 1 to 5, **characterized in that** at least one of the abutting layers (13'; 13") of at least one of the THz antennas serves as a waveguide into which the light of the laser light source (1') is coupled in a propagating manner in a plane defined by the layer (13').

7. The terahertz system according to any one of claims 1 to 6, **characterized in that** the wavelength of the laser light source (1; 1') is between 1260 nm and 1360 nm.

8. The terahertz system according to any one of claims 1 to 7, **characterized in that** the laser light source (1; 1') is given by a pulsed laser or by a two-mode laser or a system of two lasers (14) for producing a beat signal of two laser waves of a beat frequency of at least 0.1 THz.

## Revendications

1. Système térahertz pour générer et détecter de manière cohérente un rayonnement térahertz comprenant
une source de lumière laser (1 ; 1') et deux antennes THz, chacune étant couplée optiquement par une fibre optique (5) à la source de lumière laser (1 ; 1') et pouvant être activée par la lumière de cette source de lumière laser (1 ; 1') et dont une première sert d'antenne émettrice (2 ; 2') et une seconde servant d'antenne réceptrice (3),
les antennes THz comprenant chacune une puce semiconductrice en contact avec des conducteurs d'antenne (9 ; 9') et comportant au moins une couche active (12 ; 12') ayant une longueur d'onde de bord de bande supérieure à une longueur d'onde de la source de lumière laser (1 ; 1'), et au moins deux couches (13 ; 13', 13") adjacentes à la couche active (12 ; 12'), ayant une longueur d'onde de bord de bande inférieure à la longueur d'onde de la source de lumière laser (1 ; 1'),
l'au moins une couche active (12 ; 12') d'au moins une des antennes THz étant disposée entre deux des couches adjacentes (13 ; 13', 13") et ayant une épaisseur correspondant au plus à une profondeur de pénétration de la lumière de la source de lumière laser (1 ; 1'), la profondeur de pénétration étant définie par une chute d'intensité à une proportion de 1/e d'une intensité (I) de rayonnement incident, un matériau semi-conducteur constituant ladite au moins une couche active (12 ; 12') ayant une longueur d'onde de bord de bande d'au moins 1600 nm,
**caractérisé en ce que**
la longueur d'onde de bord de bande d'au moins cette au moins une couche active (12 ; 12') d'au moins d'une des antennes THz étant supérieure d'au moins 250 nm à celle de la source de lumière laser (1 ; 1').

2. Système térahertz selon la revendication 1, **caractérisé en ce qu'**un matériau semi-conducteur constituant la couche active (12 ; 12') d'au moins une des antennes THz contient de l'InGaAs.

3. Système térahertz selon l'une quelconque des revendications 1 ou 2, **caractérisé en ce qu'**une des antennes THz au moins est basée sur un photoconducteur.

4. Système térahertz selon l'une quelconque des revendications 1 à 3, **caractérisé en ce que** l'antenne émettrice (2) est basée sur une photodiode.

5. Système térahertz selon l'une quelconque des revendications 1 à 4, **caractérisé en ce qu'**au moins une couche (13 ; 13', 13") adjacente à la couche active (12 ; 12') contient de l'InGaAsP ou de l'InAlAs ou de l'InGaAlAs.

6. Système térahertz selon l'une quelconque des revendications 1 à 5, **caractérisé en ce qu'**au moins l'une des couches adjacentes (13', 13") d'au moins une des antennes THz sert de guide d'ondes dans lequel la lumière de la source de lumière laser (1') est couplée par propagation dans un plan défini par la couche (13').

7. Système térahertz selon l'une quelconque des revendications 1 à 6, **caractérisé en ce que** la longueur d'onde de la source de lumière laser (1; 1') est comprise entre 1260 nm et 1360 nm.

8. Système térahertz selon l'une quelconque des revendications 1 à 7, **caractérisé en ce que** la source de lumière laser (1; 1') est créée par un laser pulsé ou par un laser à deux modes ou un système à deux lasers (14) pour générer un signal de battement de deux ondes laser d'une fréquence de battement d'au moins 0,1 THz.
